Europäisches Patentamt

European Patent Office

Office européen des brevets

(11) Veröffentlichungsnummer: **0 580 076 A2**

# EUROPÄISCHE PATENTANMELDUNG

(21) Anmeldenummer: **93111337.7**

(22) Anmeldetag: **15.07.93**

(51) Int. Cl.5: **C08L 23/02**, C08L 23/16, C08L 23/22, C08L 9/02, C08L 51/06

(30) Priorität: **21.07.92 DE 4223984**

(43) Veröffentlichungstag der Anmeldung: **26.01.94 Patentblatt 94/04**

(84) Benannte Vertragsstaaten:
**BE DE FR GB IT NL**

(71) Anmelder: **CONTINENTAL AKTIENGESELLSCHAFT Vahrenwalder Strasse 9 D-30165 Hannover(DE)**

(72) Erfinder: **Lüpfert, Siegfried, Dr. Turnierweg 11 D-30916 Isernhagen(DE)**
Erfinder: **Röthemeyer, Fritz, Dr. Burgwedeler Strasse 67 D-30657 Hannover(DE)**
Erfinder: **Mäder, Edith, Dr. Senftenberger Strasse 10 D-01239 Dresden(DE)**

(54) **Thermoplastisches Elastomer und dessen Bindung an einen Festigkeitsträger.**

(57) Thermoplastisches Elastomer auf der Basis von wenigstens einem Polyolefin und wenigstens einem Kautschuk, wobei 10 bis 100 % des Polyolefinanteils auf ein mit polaren Monomeren gepropftes Polyolefin entfallen, und ein Verfahren zur Herstellung eines Verbundwerkstoffs, der aus einem solchen thermoplastischen Elastomer und einem Festigkeitsträger besteht.

EP 0 580 076 A2

Die Erfindung betrifft ein thermoplastisches Elastomer auf der Basis von wenigstens einem Polyolefin und wenigstens einem Kautschuk sowie ein Verfahren zur Herstellung eines Verbundwerkstoffes auf der Basis eines solchen Elastomers und eines Festigkeitsträgers.

Thermoplastischer Kautschuk vereint in seiner Charakteristik als Werkstoff zwei grundsätzliche Eigenschaften. Im Gebrauchstemperaturbereich oberhalb des Kälterichtwertes zeigt er entropieelastische Eigenschaften. Bei erhöhter Temperatur, wenn die vorhandenen physikalischen Vernetzungsstellen zu schmelzen beginnen, wird er fließfähig, um bei weiter gesteigerter Temperatur dann thermoplastisch verarbeitbar zu sein. Die physikalische Vernetzung beruht auf der Anwesenheit von kristallinen Domänen (Strukturbereichen).

Zur groben Orientierung kann man thermoplastische Elastomere in zwei Grundtypen einteilen. Zum einen sind das Blockpolymere, bei denen sich entlang der Polymerkette abwechselnd kristallisationsfähige und amorphe Teilabschnitte (Blöcke) aneinanderreihen, wobei die Mengenverhältnisse der kristallisationsfähigen und amorphen Teilstücke vom jeweiligen Typ abhängt.

Im Gebrauchstemperaturbereich bilden dann die kristallisationsfähigen Abschnitte feste Strukturbereiche, sogenannte Domänen, während die amorphen Anteile beweglich, d. h. entropieelastisch sind. Solche Blockpolymere werden nach üblichen Polymerisationsverfahren wie z. B. der Polykondensation hergestellt. Als Beispiele sind Terephtalsäureester, Polyglykolcopolymere, bestimmte Polyamide und Polyurethane zu nennen.

Der zweite Grundtyp beruht auf der Kombination einer in hohem Maße kristallinen Matrix mit einem vernetzten Elastomer. Dieser Typ wird auf dem Weg der sogenannten dynamischen Vulkanisation hergestellt. Das heißt, im Verlauf des Mischprozesses wird der Kombination des Thermoplasten mit dem Elastomer Vernetzungsmittel zugegeben, so daß die in der Matrix verteilte elastomere Phase vernetzt wird. Beispiele hierfür sind die Kombinationen von Polypropylen mit Kautschuk, wie z. B. EPDM-Kautschuk, Nitrilkautschuk oder Butylkautschuk.

Die genannten Polymerblends finden Verwendung bei der Herstellung sogenannten anisotroper Werkstoffe auf der Basis von Elastomeren, d. h. bei der Herstellung von Verbundwerkstoffen mit einer elastischen Polymermatrix und einem Hochmodulfestigkeitsträger. In der Praxis besitzen sie eine große Bedeutung und finden als Förderbänder, Schläuche, Keilriemen, gestrichene Stoffe und vieles mehr eine breite Anwendung.

Ein Nachteil der thermoplastischen Elastomere liegt aber darin, eine ausreichende Bindung zu Festigkeitsträgern zu erzielen. Im Fall der Polyolefinprodukte ist die Haftung gegenüber Festigkeitsträgern aufgrund der völlig unpolaren Polyolefine besonders gering. Versuche, die Bindung solcher Polymere gegenüber diesen Festigkeitsträgern durch Zusätze zu verbessern, waren bisher nicht erfolgreich.

Um eine gewisse Bindung zu Festigkeitsträgern zu erreichen, verwendet man deshalb bisher Bindezemente auf Polyurethanbasis, die auf den Festigkeitsträger aufgebracht werden. Diese Verfahrensweise ist aber ebenfalls nicht ohne Nachteile. Das Aufbringen des Klebers aur dem Festigkeitsträger kann unter Umständen Schwierigkeiten bereiten, und weiterhin müssen Lösungsmittel abgedunstet werden, wobei nach geltenden Umweltschutzbedingungen eine Belastung der Umwelt mit Lösungsmittelemissionen soweit irgend möglich zu unterbleiben hat. Des weiteren muß der Kleber im Weiterverarbeitungsprozeß thermisch aktiviert werden, was einen zusätzlichen Aufwand bedingt.

Der Erfindung liegt daher die Aufgabe zugrunde, ein thermoplastisches Elastomer mit verbesserten Eigenschaften bereitzustellen und ein Verfahren zur Herstellung eines Verbundwerk-stoffes auf der Basis eines thermoplastischen Elastomers und eines Festigkeitsträgers anzugeben.

Die Lösung der Aufgabe erfolgt durch die Bereitstellung eines thermoplastischen Elastomers auf der Basis von wenigstens einem Polyolefin und wenigstens einem Kautschuk, bei dem 10 - 100 % des Polyolefinanteils auf ein mit polaren Monomeren gepfropftes Polyolefin entfallen und der Kautschuk während der Herstellung des Elastomers dynamisch vernetzt wird sowie durch ein Verfahren zur Herstellung eines Verbundwerkstoffes, bestehend aus einem thermoplastischen Elastomer und einem Festigkeitsträger mit den Verfahrensschritten:

- Herstellung des Elastomers
- Aufbringen des Elastomers auf den Festigkeitsträger
- Verbinden von Elastomer und Festigkeitsträger unter erhöhtem Druck und erhöhter Temperatur.

Aus DD-PS 275 159, DD-PS 275 160, DD-PS 275 161 und DD-PS 266 358 ist es bekannt, Pfropfcopolymere auf der Basis von Polypropylen (PP) unter Aufrechterhaltung einer trockenen pulvrigen Konsistenz des Reaktionsmediums bei Temperaturen bis 100 °C herzustellen, wobei aber auch Propylencopolymere mit geringfügigen Masseanteilen von 0,5 bis 5 % an einpolymerisierten Comonomeren, insbesondere Ethylen- und Buteneinheiten, als zu modifizierendes Polypropylen eingesetzt werden.

EP 0 580 076 A2

Überraschenderweise zeigt sich, daß durch Blendbildung von Kautschuken mit bestimmten Pfropfcopolymeren auf der Basis von Polypropylen oder Ethylenvinylacetat-Copolymeren eine deutlich verbesserte Bindefähigkeit gegenüber Festigkeitsträgern erreicht wird, ohne daß Klebstoffe oder Zemente auf den Festigkeitsträgern aufgebracht werden müssen. Hierbei handelt es sich um einen Direkthaftungseffekt, der durch die Pfropfung von Polypropylen oder Ethylenvinylacetat-Copolymeren mit polaren Monomeren, vor allem solche mit ethylenisch ungesättigten carboxylgruppenhaltigen Verbindungen wie Acrylsäure, Methacrylsäure oder Itaconsäure sowie Maleinsäureanhydrid, zu-stande kommt.

Zur Compoundherstellung, vorzugsweise auf einem Zweiwellenextruder oder in einem Innenmischer, wird zunächst der Kautschuk mit den üblichen Zusatzstoffen, wie Weichmacheröl, Aktivatoren usw., einschließlich eines Teiles des Vernetzungssystems, dem Polyolefin und dem Pfropfcopolymer eindosiert und homogenisiert. Nach der Homogenisierung wird ein weiterer Teil der Vernetzungskomponenten zugesetzt und bei höherer Temperatur die Vernetzung des Elastomers bewirkt.

Nach dem Abschluß der Reaktion kann die Formmasse entweder direkt auf einen Festigkeitsträger aufgebracht werden oder nach einer Formgebung, z. B. in einem Kalander, zu Folien- oder Plattenmaterial abgelegt oder zu Granulat verarbeitet werden. Mit der zu Folien oder Granulat verarbeiteten Formmasse können in einer zweiten Verarbeitungsstufte Verbunde durch Preß- oder Spritzgießtechniken hergestellt werden.

Ein besonderer Vorteil der erfindungsgemäßen thermoplastischen Elastomere, im Gegensatz zu hauptvalenzmäßig vernetzten Elastomeren (dem sogenannten Gummi) fällt bei den erfindungsgemäßen thermoplastischen Elastomeren die chemische Vernetzung (Vulkanisation) als Fertigungsstufe bei der Herstellung von Verbundwerkstoffen weg, so daß die Herstellung in zwei unabhängigen Verfahrensschritten erfolgen kann. Von wesentlicher Bedeutung ist dabei, daß bei den erfindungsgemäßen thermoplastischen Elastomeren eine hohe Bindefähigkeit zu Festigkeitsträgern vorhanden ist, ohne daß die Verwendung von Klebern oder Bindezementen notwendig ist.

Da thermoplastische Elastomere nach der Verformung im thermoplastischen Temperaturbereich beim Abkühlen wieder in den elastischen Zustand zurückkehren, ermöglicht dies weiterhin die Wiederverwendung von Abfall oder auch von gebrauchten Artikeln. Da dieser Vorgang reversibel ist, ergibt sich die vorteilhafte Möglichkeit, diese Stoffe als Recyclate sehr lange im Produktkreislauf zu halten. Als einzige Einsatzgrenze dieser thermoplastischen Elastomere ist lediglich der Temperaturbereich zu nennen, in dem sie eingesetzt werden können, da dieser durch den Schmelzbereich der physikalischen Vernetzung vorgegeben ist.

Der gute Bindeeffekt der erfindungsgemäßen thermoplastischen Elastomere bei der Verwendung von Polyamid- und Polyesterflächengebilden als Festigkeitsträger und insbesondere auch auf gereinigtem aber ansonsten unbehandeltem Metall wird in den nachstehenden Beispielen beschrieben.

Besonders vorteilhaft ist es, bei der Verwendung von Polyamid- bzw. Polyesterflächengebilden als Festigkeitsträger organofunktionelle Substanzen mit kationischen Gruppen zu applizieren. Überraschenderweise wird dadurch der Bindeeffekt der erfindungsgemäßen thermoplastischen Elastomere zu den erwähnten Festigkeitsträgern weiter erhöht.

Vorzugsweise können polymere Ammoniumverbindungen oder auch Aminosilane als kationaktive Substanzen aus wässriger Lösung auf die Flächengebilde aufgebracht werden. Da die Applikation dieser Verbindungen aus einer wässrigen Lösung erfolgt, entstehen auch keine Umweltbelastungen durch organische Lösungsmittel. Ebenso ist eine zusätzliche Aktivierung im weiteren Herstellungsprozeß der Verbundwerkstoffe nicht nötig.

Als kationaktive Verbindungen werden vorzugsweise Polydi-methyl-allylammoniumchlorid (PDMDAAC) oder $\gamma$-Aminopropyl-triethoxisilan (A 1100) verwendet.

In einer vorteilhaften Ausführungsform erfolgt die Compoundherstellung auf einem Zweiwellenextruder, wobei zunächst der Kautschuk mit den üblichen Zusatzstoffen und eines Teiles des Vernetzungssystems, Polypropylen und dem Pfropfcopolymer in den Extruder eindosiert und homogenisiert. Danach wird ein weiterer Teil der Vernetzungskomponenten zugesetzt und bei höherer Temperatur die Vernetzung des Elastomers bewirkt. Nach Abschluß der Reaktion (z. B. in einem Doppelschneckenextruder der Firma Werner/Pfleiderer, Typ 40 D) wird die Formmasse entweder durch Breitschlitzextrusion auf einen Festigkeitsträger extrudiert und durch einen Dublierprozeß mit einem Liniendruck von 10 - 50 kg/cm bei einer Temperatur von 180 - 200 °C der Verbund hergestellt, oder die Formmasse nach der Breitschlitzextrusion und einer Formgebung im Kalander zu Folien- oder Plattenmaterial abgelegt oder zu Granulat verarbeitet. Mit der zu Folien oder Granulat verarbeiteten Formmasse können in einer unabhängigen zweiten Verarbeitungsstufe Verbunde durch Preß- oder Spritzgießtechniken hergestellt werden.

In einer vorteilhaften Ausgestaltung des Verfahrens wird zuerst der Kautschuk mit den entsprechenden Zusatzstoffen und das thermoplastische Olefin, vorzugsweise Polypropylen, sowie die Vernetzungskomponente in einen Zweiwellenextruder eindosiert und unterhalb der Vernetzungstemperatur homogenisiert. Nachträglich wird dann das Pfropfcopolymer zugesetzt, um weitere Reaktionen des Polyolefins mit der Pfropfung zu vermeiden. Nach einem kurzen Homogenisierungsvorgang wird die Mischung dann auf die für die Vernetzung des Kautschuks notwendige Temperatur gebracht.

In einer weiteren vorteilhaften Ausgestaltung des Verfahrens wird zunächst der Kautschuk mit den Zusatzstoffen und der Vernetzungskomponenete in den Extruder eindosiert und unter Bedingungen, bei denen die Vernetzung noch nicht einsetzt, homogenisiert. Anschließend wird dann das Polyolefin und das Pfropfcopolymer zugegeben. Nach einem sich anschließenden angemessenen Homogenisierungsvorgang erfolgt die Vernetzung des Kautschuks.

Als Kautschuk finden vorzugsweise EPDM-Kautschuk, Nitrilkautschuk und Butylkautschuk oder eine Mischung aus diesen Verwendung zur Herstellung der erfindungsgemäßen thermoplastischen Elastomere. Der Polyolefinanteil der erfindungsgemäßen Elastomere beträgt 25 - 75 Massenprozent, wobei 10 - 100 % des Polyolefinanteils auf ein mit polaren Monomeren gepropftes Polyolefin entfallen.

Der zur Herstellung des erfindungsgemäßen thermoplastischen Elastomers verwendete Kautschuk enthält, bezogen auf den Kautschuk, vorzugsweise 0,3 - 2,5 Teile Weichmacheröl sowie übliche Zusatzstoffe wie Pigmente, Verarbeitungshilfen, Aktivatoren und Flammschutzmittel. Als Polyolefin wird vorzugsweise Polypropylen verwendet, während als Pfropfcopolymere Copolymere auf der Basis von Polypropylen oder eines Ethylenvinylacetat-Copolymers eingesetzt werden. Letztere sind vorzugsweise mit ethylenisch ungesättigten, carboxylgruppenhaltigen Verbindungen wie Acrylsäure, Methacrylsäure und Itaconsäure oder Maleinsäureanhydrid gepfropft.

Je nach Ausgestaltung des Verfahrens erfolgt die Vernetzung des Kautschuks durch Peroxidvernetzung, Silanvernetzung oder Schwefelvernetzung.

In Tabelle 1 sind die Anteile an Kautschuk, Polyolefin sowie Pfropfcopolymeren verschiedener thermoplastischer Elastomere aufgeführt. Die Pfropfcopolymere sind als Z1 bis Z3 bezeichnet und haben folgende Zusammensetzungen:

Z1 = pulvriges PP-Pfropfcopolymer
($M_W$ = 159 00, Isotaxie = 0,92, Gelgehalt = 40 %, Pfropfmonomere: 9 % Acrylsäure, 6 % Styren, Carboxylgruppengehalt: 4,96 %)

Z2 = pulvriges EVA-Pfropfcopolymer
Vinylacetatgehalt 15 - 18 %
Pfropfmonomere: 5 % Acrylsäure, 2,5 % Maleinsäureanhydrid,
Carboxylgruppengehalt: 4,3%)

Z3 = pulvriges EVA-Pfropfcopolymer
Vinylacetatgehalt 15 - 18 %
Pfropfmonomer: 9 % Acrylsäure,
Carboxylgruppengehalt: 5,26 %

Die Formmasse 1 entspricht einem thermoplastischen Elastomer, wie es aus dem Stand der Technik bekannt ist und eingangs beschrieben wurde. Es ist in den Tabellen 1 und 2 zum Vergleich mit den erfindungsgemäßen thermoplastischen Elastomeren aufgeführt.

In der Tabelle 2 sind die erhaltenen Kennwerte, der mit den in Tabelle 1 beschriebenen Formmassen dargestellt. Das Prüfen der Trennkräfte bzw. der Trennwiderstände wurde nach DIN 53530 vorgenommen.

Aus dieser Tabelle ist ohne weiteres ersichtlich, daß die erfindungsgemäßen thermoplastischen Elastomere im Vergleich mit den aus dem Stand der Technik Bekannten eine überraschend hohe Bindefestigkeit aufweisen.

EP 0 580 076 A2

Tabelle 1

| Formmasse | 1 | 2 | 3 | 4 |
|---|---|---|---|---|
| EPDM[1] | 50 | 50 | 50 | 50 |
| Butylkautschuk | - | - | - | - |
| Polypropylen[2] | 50 | 30 | - | - |
| Zusatz Pfropfcopolymer | - | 20 Z1 | 50 Z2 | 50 Z3 |
| Verdünnungsöl | x | x | x | x |
| ZnO[3] | | | | |
| $Sn\ Cl_2\ x\ 2\ H_2O$ | x | | | |
| Hypalon | | | | |
| Phenolharz | | | | |
| Schwefelhärter[4] | | x | | |
| Peroxid[5] | | | x | |
| Silan[6] | | | | |

1. EPDM: $ML_{1+4}$ 125 °C 34, $C_2$ 60 %, EN 5 %, 75 phr Öl
2. $M_w$: 160 000, Isotaktizitätsgrad: 92, MFI 190/5: 20 g/ 10 min
3. Härteharz:    auf 50 Tl. EPDM 7 Teile Härter

        Zinn-2-chlorid          2
        Vulkaresen PA 510        3
        Zinkoxid                 2
                                 7

4. Schwefelhärter:    auf 50 Tl. EPDM
                1,4 Tl. Schwefelhärter:
                    0,5 Schwefel
                    0,3 TMTD
                    0,3 MBT
                    0,3 ZBEC

5

```
5.  Peroxid:      4,29  Peroxid-Gemisch
                  3,5   Trigonox 101-50 D (45 %)
                        2,5-(tert.-butylperoxid)-2,5-dimethyl-
                        hexan
                  0,79  Perkalink DP 500
                        1,3-Diisopropenylbenzol oligomer


6.  Silan:  3,0 Vinyl-tris-(2-methoxyethoxysilan)
            mit Peroxid als Katalysator


7.  IIR: (Isobutylen-isoprene-Copolymer)
         ML_{1+8} 125 °C 51, unges. Mol % 1,6
```

Tabelle 2

| Verbund | 1 | 2 | 3 | 4 | 5 |
|---|---|---|---|---|---|
| Formmasse | 1 | 2 | 3 | 4 | 5 |
| Festigkeitsträger Vorbehandlung Festigkeitsträger | Polyamidgewebe ohne | Stahlprofil ohne | Polyamidgewebe a 1100 | Polyestergewebe PDMDAAC | Polyamid gewebe A 1100 |
| Trennkraft (N/25 mm) | 1,5 | 65 | 100 | 55 | 90 |
| Trennwiderstand (N/mm) | < 0,1 | 2,6 | 4 | 2,2 | 3,6 |

**Patentansprüche**

1. Thermoplastisches Elastomer auf der Basis von wenigstens einem Polyolefin und wenigstens einem Kautschuk, dadurch gekennzeichnet, daß 10 - 100 % des Polyolefinanteils auf ein mit polaren Monomeren gepfropftes Polyolefin entfallen.

2. Thermoplastisches Elastomer nach Anspruch 1, dadurch gekennzeichnet, daß der Polyolefinanteil 25 - 75 Massenprozent beträgt.

3. Thermoplastisches Elastomer nach Anspruch 1 oder 2, dadurch gekennzeichnet, daß das wenigstens eine Polyolefin Polypropylen ist.

4. Thermoplastisches Elastomer nach einem der Ansprüche 1 bis 3, dadurch gekennzeichnet, daß das Pfropfpolymer ein Copolymer auf der Basis eines Poyolefins mit ethylenisch ungesättigten, carboxylgruppenhaltigen Verbindungen wie Acrylsäure, Methacrylsäure und Itaconsäure oder Maleinsäureanhydrid ist.

5. Thermoplastisches Elastomer nach Anspruch 4, dadurch gekennzeichnet, daß das Pfropfcopolymer ein Pfropfcopolymer auf der Basis von Polypropylen oder eines Ethylenvinylacetat-Copolymers als Polyolefin ist.

6. Thermoplastisches Elastomer nach einem der Ansprüche 1 bis 5, dadurch gekennzeichnet, daß der Kautschuk EPDM-Kautschuk, Nitrilkautschuk, oder Butylkautschuk ist.

7. Thermoplastisches Elastomer nach einem der Ansprüche 1 bis 6, dadurch gekennzeichnet, daß daß das Elastomer im Verhältnis zum Kautschuk 0,3 - 2,5 Teile Weichmacheröl enthält.

8. Thermoplastisches Elastomer nach einem der Ansprüche 1 bis 7, dadurch gekennzeichnet, daß das Elastomer übliche Füllstoffe wie Pigmente, übliche Verarbeitungshilfsmittel und Flammschutzmittel enthält.

9. Thermoplastisches Elastomer nach einem der Ansprüche 1 bis 8, dadurch gekennzeichnet, daß der Kautschuk während der Herstellung des thermoplastischen Elastomers dynamisch vernetzt worden ist.

10. Thermoplastisches Elastomer nach einem der vorhergehenden Ansprüche, dadurch gekennzeichnet, daß die Vernetzung des Kautschuks durch Peroxidvernetzung, Silanvernetzung oder Schwefelvernetzung erfolgt ist.

11. Verfahren zur Herstellung eines Verbundwerkstoffes, bestehend aus einem Thermoplastischen Elastomer nach einem der Ansprüche 1 bis 10 und einem Festigkeitsträger mit folgenden Verfahrensschritten:
   - Herstellung des Elastomers
   - Aufbringen des Elastomers auf den Festigkeitsträger
   - Verbinden Von Elastomer und Festigkeitsträger, unter erhöhtem Druck und erhöhter Temperatur.

12. Verfahren zur Herstellung eines Verbundwerkstoffs nach Anspruch 11, dadurch gekennzeichnet, daß die Herstellung des thermoplastischen Elastomers in einem Extruder erfolgt.

13. Verfahren zur Herstellung eines Verbundwerkstoffs nach Anspruch 11 oder 12, dadurch gekennzeichnet, daß der Festigkeitsträger aus Polyamid, Polyester oder Metall besteht.

14. Verfahren zur Herstellung eines Verbundwerkstoffs nach einem der Ansprüche 11 bis 13, dadurch gekennzeichnet, daß der Festigkeitsträger mit einer wässrigen Lösung einer kationischen organischen Verbindung vorbehandelt ist.

15. Verfahren nach Anspruch 14, dadurch gekennzeichnet, daß als kationische organische Verbindung eine polymere Ammoniumverbindung oder ein Aminosilan verwendet wird.

16. Verfahren nach Anspruch 15, dadurch gekennzeichnet, daß als kationische organische Verbindung Polymethyldiallylammoniumchlorid (PDMDAAC) oder $\gamma$-Aminopropyltriethoxisilan verwendet wird.

17. Verfahren nach Anspruch 16, dadurch gekennzeichnet, daß die wässrige Lösung 0,01 mol/l Polymethyldiallylammoniumchlorid bzw. 0,5 mol% $\gamma$-Aminopropyltriethoxisilan enthält.

18. Verfahren nach einem der Ansprüche 11 bis 17, dadurch gekennzeichnet, daß die Verbindung der Formmasse mit dem Festigkeitsträger bei einem Liniendruck von 10 - 50 kg/cm und einer Temperatur von 180 - 200 °C erfolgt.